# EUROPEAN PATENT SPECIFICATION

(11) **EP 2 776 754 B1**
(45) Date of publication and mention of the grant of the patent: **28.02.2018**
(21) Application number: 12847480.6
(22) Date of filing: 06.11.2012
(51) Int. Cl.: F16L 58/10, B05D 7/22, B05D 7/26, C09D 183/04, B24C 3/32, B05D 3/04, B05D 3/02

(54) **COATING A PIPE OR A SYSTEM OF PIPES WITH A POLYMER MATERIAL**
BESCHICHTUNG EINES ROHRS ODER EINES ROHRLEITUNGSSYSTEMS MIT EINEM POLYMERMATERIAL
REVÊTEMENT D'UNE CONDUITE OU D'UN SYSTÈME DE CONDUITES AVEC UN MATÉRIAU POLYMÈRE

(30) Priority: 07.11.2011 SE 1151043
(43) Date of publication of application: 17.09.2014
(73) Proprietor: HWQ Entreprenad AB, 169 37 Solna (SE)
(72) Inventor: HÅKANSSON, Stefan, 113 43 Stockholm (SE)
(74) Representative: Brann AB
(86) International application number: PCT/SE2012/051206
(87) International publication number: WO 2013/070156

(56) References cited:
- EP-A1- 0 299 134
- EP-A1- 1 683 823
- EP-A1- 2 065 631
- WO-A1-99/67336
- WO-A1-2007/104122
- WO-A1-2007/104122
- WO-A1-2009/070135
- WO-A2-02/090108
- WO-A2-2008/034409
- US-A- 4 644 907
- US-A- 5 275 645
- US-A1- 2004 260 048
- US-A1- 2005 287 294
- US-A1- 2008 268 162
- US-A1- 2009 226 742
- DATABASE WPI Derwent Publications Ltd., London, GB; AN 2006-588795, XP055152313 & JP 2006 206817 A (GE TOSHIBA SILICONES CO LTD) 10 August 2006

## Description

### TECHNICAL FIELD

The present invention relates to the field of internally coating a pipe or a system of pipes with a polymer material.

### BACKGROUND

Piping systems made of metal and plastic are among others used as hot water pipes, cold water pipes, portable water pipes, natural gas pipes, drain pipes, and fire sprinkler system pipes, and the like. Such piping systems are used in commercial buildings, apartment buildings, homes and the like, where they eventually develop problems. These problems can be due to destructive effects of liquids and gases such as corrosion and erosion as well as blockage due to mineral deposits. These destructive effects can lead to water leaks if the piping systems are not changed or repaired. In order to change the pipes one often has to tear down parts of the building, such as kitchens and bath-rooms, in order to access the old pipes. This is of course very time consuming and costly.

To clean pipes by blowing abrasive materials is previously known. EP 0299134 describes a method of cleaning pipes and internally coating them with an adhesive resin. This method can take several days to perform.

Not being able to use the pipes for several days is of course almost always a problem and a faster method would be highly desirable.

It is also highly desirable that the internal coating be able to withstand high stresses such as frequent use, corrosive agents and high temperatures.

The up until now used coating materials can be two-component materials which are mixed at the place of use. Normally, hardened, finished polymers are regarded as non-toxic while uncured resin components are considered to be harmful. This method therefore possesses a health risk to the people working with the uncured resin components as well as a risk for the environment. Normally, it is also difficult to ensure a high and even level of quality since the material is applied while it is curing. Other aspects of using two-component materials that are negative are the perception and requirements from authorities and general public. Their perception of things such as compositions containing harmful uncured resin components combined with political pressure from environmental groups to restrict the use of such compositions and materials makes the utilization of two component materials troublesome. Regardless of these issues for instance epoxy materials have found use for relining despite the environmental and political drawbacks. There are also known one component materials. EP 2 065 631 A1 discloses, see claim 1 of this document, a method of internally coating a pipe comprising the steps of;
i) drying the pipe by a flow-through of dehumidified, compressed air followed by;
ii) cleaning said pipe by pumping a mixture of compressed air and particles of an abrasive material through the pipe and;
iii) blowing compressed air at a controlled flow and temperature together with a liquid polymer coating material comprising a polymer composition into the pipe so that a coating layer is applied onto the interior walls of the pipe followed by;
iv) allowing the polymer coating material to cure. Thus, there is still room for improvement with regard to the drawbacks encountered and requirements from authorities and the general public people with the presently used methods for coating existing pipes and pipe systems.

### DESCRIPTION OF THE INVENTION

The present invention provides an alternative way of internally coating a pipe or a system of pipes, which fulfils the requirements according to the various aspects mentioned above, in particular being non-toxic. The method of the present invention is particularly useful for increasing the productivity when renovating pipes or system of pipes, since the time before the pipe can be used again is decreased by almost 50 %

The method according to an aspect of the present invention comprises the steps of drying the pipe by a flow-through of dehumidified, compressed air followed by cleaning said pipe by pumping a mixture of compressed air and particles of an abrasive material, such as sand or aluminium oxide, through the pipe and blowing compressed air at a controlled flow and temperature together with a liquid polymer coating material comprising a silane (Silicon) based polymer composition into the pipe so that a coating layer is applied onto the interior walls of the pipe, and allowing the polymer to self-cure at ambient temperature.

In view of the closest prior art, the present invention solves the above-mentioned technical problems especially by the fact that the coating polymer is silane based and is then allowed to self-cure at ambient temperature.

The method typically takes 24-48 hours to perform and complete for a conventional pipe system in a 3-5 stories building and results in a strong chemically, mechanically and thermally resistant coating of the interior of the pipe system. An advantage compared to known methods is that the invented method does not require additional heating to cure the coating material since it self-cures at ambient temperature, which reduces time of operation significantly.

By means of the inventive method non-toxic internal coating of a pipe is achieved. No part of the inventive method includes risks with hazardous chemicals since the silane based liquid polymer composition is non-toxic also before curing and fulfils requirements according to the construction industries requirements of using only non-toxic substances. An example of a silane based polymer composition that can be used is manufactured and sold under the name PermaProtect™ by Silanex AB, Sweden. The silane based polymer composition is also listed in "Basta" which is a list of environmentally friendly materials used by the Swedish construction industries. The silane based polymer composition is non-toxic in all aspects, in particular the composition contains no bisphenol A during mixing and curing, thereby providing a clear benefit compared to epoxy, which may be toxic if cured under uncontrolled conditions. Epoxy is non-toxic if cured under controlled conditions just as the silane based polymer, but the mechanical wear resistance of the silane based polymer of the final coating improved compared to epoxy.

Linear silanes, such as mono-, di-, tri-, tetra-, etc. silanes can be used, wherein Si₂H₆ is disilane, Si₃H₈ is trisilane, and so forth. Alternatively, branched silanes such as silyl, disilanyl etc. can be used. Other compositions based on silicon Si may also be possible to use.

By means of the inventive method non-toxic internal coating of a pipe is achieved. Coating is also faster than known methods of coating since the silane based polymer does not have to be cured under controlled conditions but can be allowed to self-cure at ambient temperature of the pipe. In this way, it is possible to start working on a first pipe system, leaving the first pipe system to self-cure, while starting on another second pipe system. This reduces operating time by almost 50 % compared to known methods of relining pipes with for instance epoxy.

Also, the equipment for applying the polymer composition may be simpler than the one used by known methods since no temperature control is required during curing. This will be further explained as follows.

It is also possible to apply thicker coatings than known coatings, which implies better wear resistance compared to known methods.

Further advantages include reduced salt precipitates, reduced chemical degradation, reduced biological degradation, and improved heat insulator.

### SHORT DESCRIPTION OF THE DRAWINGS

Fig. 1 shows an example of a cold water piping system with a closing valve in the basement and a connecting pipe on each storey in a four-storied house, of which
   A = Connection pipe storey 4
   B = Connection pipe storey 3
   C = Connection pipe storey 2
   D = Connection pipe storey 1
   E = The piping system connected on the ground-floor in the basement
Fig. 2 shows a connection system used in the present method.

### DETAILED DESCRIPTION

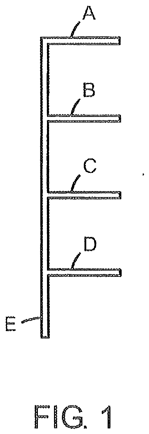

Fig. 1 shows an example of a cold water piping system with a closing valve in the basement and a connecting pipe on each storey in a four-storied house, of which
A = Connection pipe storey 4
B = Connection pipe storey 3
C = Connection pipe storey 2
D = Connection pipe storey 1
E = The piping system connected on the ground-floor in the basement

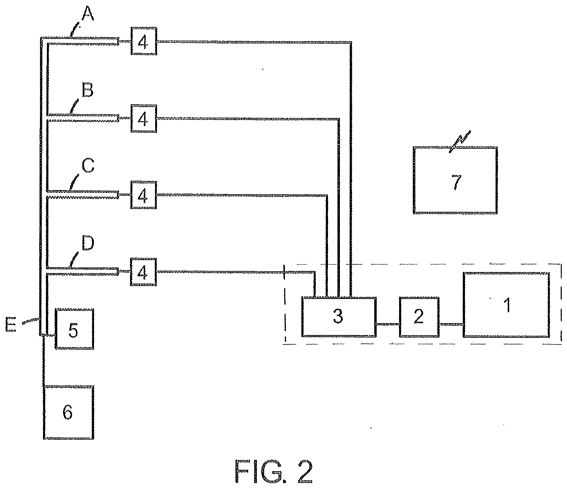

Fig. 2 shows a connection system suitable for use in the present method. 1 is a compressor; 2 a pre-heater; 3 an air-distributor with a container for compressed air. A-E each indicates a storey as referred to in Fig. 1. 4 is an air-heater with a controllable regulation; 5 is a temperature sensor, 6 is a filter, and 7 is a computer. The different units of the connection system are connected with the piping system and each other by means of hoses. The pre-heater 2, and the filter 6 can be combined with the compressor 1.

The present invention provides a method of internally coating a pipe or a system of pipes.

The method according to an embodiment of the present invention comprises the steps of drying the pipe by a flow-through of dehumidified, compressed air followed by; cleaning said pipe by pumping a mixture of compressed gas and particles of an abrasive material through the pipe, and; by means of the distributor 3 blowing compressed air at a controlled flow and temperature of about 25 - 35 °C together with a liquid polymer coating material comprising a silane based polymer composition into the pipe so that a coating layer is applied onto the interior walls of the pipe followed by allowing the polymer coating material to self-cure at ambient temperature of the pipe. An example of a silane based polymer composition that can be used is manufactured and sold under the name PermaProtect™ by Silanex AB, Sweden. The silane based polymer composition is blown out by means a digitally controlled flow and temperature until the pipe or pipe system is coated and seamless. Thereafter the silane based polymer composition is allowed to cure at ambient temperature, followed by inspection for instance by filming the pipe and pressure testing with water. Herein, ambient temperature is typically room temperature, for example 20-25 °C (Sweden), but may vary depending on surroundings.

By means of having a digital heat/flow control in each pipe section total control is provided of the process and an even coating is achieved in the entire pipe or pipe system. This reduces the risk of the airflow to take the fastest way which implies different thicknesses due to different diameters of pipes and/or different stories if only one distributor should have been used instead.

Typically, according to an embodiment of the present invention, the compressor 1 contains the preheater 2, and optionally filters etc. such that heated dehumidified air, free from oil is provided.

Typically, according to an embodiment of the present invention, the blasting equipment and vacuum unit are controlled by one and the same remote control and reduces over pressure in the pipe system, which reduces risk for blasting a hole or to suffer from blasting sand stop.

The inventive method is faster than known methods of coating since the silane based polymer material does not have to be cured under controlled conditions but can be allowed to self-cure at ambient temperature of the pipe. In this way, it is possible to start working on one pipe system, leaving the pipe system to self-cure, while starting on another pipe system. This increases productivity by almost 50 % since curing under controlled conditions, which is required by known methods using epoxy typically, takes as much time as cleaning and coating together.

In this way, by means of the inventive method, a non-toxic pipe coating free from bisphenol A, is achieved.

In a first embodiment of the invention the pipe is a system of pipes.

In a second embodiment of the invention the system of pipes is selected from the group consisting of a gutter pipe, a rain pipe, a sewage pipe, a hot water pipe, a cold water pipe, a drain pipe, a portable water pipe, a natural gas pipe, and a fire sprinkler system pipe.

In a third embodiment of the invention the polymer composition has a viscosity sufficient for the uncured silane based composition to stay on the wall of the pipe.

Examples of silanes that can be used are: linear silanes, such as mono-, di-, tri-, tetra or branched silanes.

The method is simplified, the quality of the product increases and the health risks for the person carrying out the method decreased compared to conventional relining methods. It is also safer from an environmental point of view.

In a seventh embodiment of the invention the pipe that can be internally coated by the method of the invention has a diameter in the range of 10-150 mm.

In an eight embodiment of the invention the pipe is ready for intended use in 24 to 48 hours. The method according to the present invention should be possible to carry out during this time and the coating layer should have had time to cure and/or dry. In practise this means that a piping system can be fixed and ready for use in a day or two.

In a ninth embodiment of the invention the step iii) is repeated one or more times. The pipes will thereafter have an internal coating comprising several coating layers.

In a tenth embodiment of the invention the completed internal coating of the pipe is checked by pressure tests and optical tests using fibre optics.

The term "pipe" in this description includes all possible types of pipes or parts of pipes for liquids and gases such as those described in the background. By the term piping system is in this description meant a number of pipes connected in a system, such as a system of pipes comprising a main pipe in a building that branches off into different pipes going to different locations such as kitchens and bathrooms. The invention is explained by way of an example but should not be limited thereto.

### Equipment used

Compressor 1: Should preferably deliver 0.8 MPa (8 bar) pressure. The compressor should be able to deliver dehumidified and oil-free air. The flow is determined by the diameter of the pipe according to the table below.

Maximal pipe diameter mm, minimum flow m³
Pre-heater 2: A pre-heater is integrated the compressor to give the system a constant temperature of 25-35 °C. By keeping the system at the same temperature one gets a more stable process disregarding the out-door temperature.

Air-distributor for compressed air 3: No tank is required but only a simple air-distributor
Air-heater with controllable regulation 4: Air-heater with controllable heating and controllable flow valves. The heaters have intrinsic temperature and flow sensors that send signals to a computer which in turn controls temperature and flow from the air-heaters.

Temperature sensor and flow sensor 5 can be integrated with the compressor.

Filter 6: A filter can optionally be connected at the end of the system and it cleans the outflow from particles and dust.

Computer 7: A computer with a software that controls the heaters after receiving signals from the sensors.

Hoses, connections: The connections between the equipment and the water/heating-system that is to be renovated are pressure air hoses and connections of different dimensions that are heat-isolated and adapted for sand blasting.

### Example of a piping system

An example of a cold water piping-system from the closing valve in the basement with a connection tube on each floor in a four-storied house.

### Connection of the system

The compressor 1 is via a hose connected to a pre-heater 2, which in turn is connected to an air-distributor with a container for compressed air 3. From the air-distributor with the container for compressed air 3 goes a hose to every storey where they are connected to air-heaters with controllable regulation 4. There are air-heaters with controllable regulation on each storey, each having a hose from the air-distributor for compressed air. Air-heaters with controllable regulation 4 are connected via hoses to the connection pipes A-E on each storey. The connection pipe of the piping system on the ground-floor/in the basement E is via a hose connected to the filter 6. On the connection pipe of the piping systems on the ground-floor/in the basement E. A computer 7, placed at a chosen location in the vicinity of the system can communicate preferably wire-less with all the sensors.

### Method

Drying: By blowing dehumidified warm air (approximately 60 °C) through the whole piping system the pipes are dried until completely dry. This results in deposits of the pipes becoming porous and that no particles of the abrasive material used to blast the pipes get caught in the pipes.

Blasting: Blasting material is dosed into each cutting off of the piping system and is blasted inside the pipe until all deposits are gone. Different pressures and different abrasive materials are used for blasting the pipes depending on the material and the condition of the pipe. Examples of abrasive materials than can be used is glass beads, aluminium oxide, sand, steel grit and steel shots. The pressure can for examples be 0.2-0.4M MPa (2-4 bar) when blasting copper pipes and 0.2-0.6 MPa (2-6 bar) when blasting iron, galvanized and steel pipes. The inside of the pipe is examined by fibre optics at regular intervals throughout the whole process. All material removed is collected in the filter and dirt will at no time be in contact with the building or the apartments.

Coating: The liquid polymer coating material may comprise materials such as a polymer composition comprising silane, possibly fibres and a thickening agent. The coating material is blown into every cutting off of the piping system and is evenly spread with a controlled flow and temperature onto the inside of the piping system. The thickness of the plastic can be varied depending on the flow and the temperature. The flow and the temperature used have to be varied depending on the type of pipe or system of pipes that is going to be internally coated by the method of the invention. A person skilled in the art can easily adapt the flow and the temperature accordingly.

An example of a silane based polymer composition that can be used is manufactured and sold under the name PermaProtect™ by Silanex AB, Sweden. The silane based polymer composition contains > 25 % silane-silicon polymer; 0,1-0,5 % methanol; 1-20 % 1,7-bis(triethoxysilyl)-4-azaheptan; 5-10 % silane, dichlormethyl-, surface modified silicon dioxide; and 12, 5-15 % dye. Before and after curing, the polymer based polymer composition can be handled without any risks, since the content of hazardous substances released during mixing and use of the silane based polymer composition are well below hygienic threshold values.

Drying: The silane based polymer material cures/dries ambient temperature, for example at a temperature in the range of 20-25 °C.

The flow is regulated to a constant flow during coating to obtain a desired thickness of 0.2-0.6 mm of the coating material. The air-distributor for compressed air evens out possible variations in the system and also has a regulator/vent which provides the air-heaters with a desired flow. A regulator/vent is used on every cutting off and at the end of the piping system.

The coating and the drying steps can be repeated to obtain a thicker coating layer.

Controls: Both pressure tests and optical examinations with fibre optics can be used to ensure that the coating material has completely covered the piping system and that the system does not leak during pressure. The pipe can be in normal use again 24-48 hours after the initiation of the coating process.

### Example 1:

A copper pipe with a diameter of 22 mm and a length of 3 m can be coated internally by the method according to the present invention. The coating material can be a silane based polymer composition A. The liquid silane based polymer composition should be blown through the pipe at an air-temperature of 25-35 °C and a flow of 0.5 m³/min. The coating material is allowed to cure for 24 hours min at ambient temperature. An evenly formed plastic coating of 0.34 mm, which completely covers the interior of the pipe, has been formed.

Other non-limiting examples follow with reference to Table 1

**Table 1**

| Galv pipe | Copper pipe | Inner diameter | Flow I/min | |
|---|---|---|---|---|
| | 12 | 10 | 196 | |
| | | 12 | 283 | |
| | 15 | 13 | 332 | |
| | | 14 | 385 | |
| | | 15 | 442 | |
| 1/2 inch | 18 | 16 | 502 | |
| | | 17 | 567 | |
| | | 18 | 636 | |
| | | 19 | 708 | |
| | 22 | 20 | 785 | |
| | | 21 | 865 | |
| 3/4 inch | | 22 | 950 | |
| | | 23 | 1038 | |
| | | 24 | 1130 | |
| | 28 | 25 | 1227 | |
| | | 26 | 1327 | |
| 1 inch | | 27 | 1431 | |
| | | 28 | 1539 | |
| | | 29 | 1650 | |
| | | 30 | 1766 | |
| | | 31 | 1886 | |
| | | 32 | 2010 | |
| | | 33 | 2137 | |
| | | 34 | 2269 | |
| | | 35 | 2404 | |
| 1 1/4 inch | | 36 | 2543 | |
| | | 37 | 2687 | |
| | | 38 | 2834 | |
| | 42 | 39 | 2985 | |
| | | 40 | 3140 | |
| | | 41 | 3299 | |
| | | 42 | 3462 | |
| | | 43 | 3629 | |
| | | 44 | 3799 | |
| | | 45 | 3974 | |
| | | 46 | 4153 | |
| | | 47 | 4335 | |
| | | 48 | 4522 | |
| | | 49 | 4712 | |
| | | 50 | 4906 | |
| | 54 | 51 | 5104 | |
| | | 52 | 5307 | |
| 2 inch | | 53 | 5513 | |
| | | 54 | 5723 | |
| | | 55 | 5937 | |
| | | 56 | 6154 | |
| | | 57 | 6376 | |
| | | 58 | 6602 | |
| | | 59 | 6831 | |
| | | 60 | 7065 | |
| | | 61 | 7302 | |
| | | 62 | 7544 | |
| | | 63 | 7779 | |
| | | 64 | 8017 | |
| | 70 | 66 | 8492 | |

## Claims

1. A method of internally coating a pipe comprising the steps of;
i) drying the pipe by a flow-through of dehumidified, compressed air followed by;
ii) cleaning said pipe by pumping a mixture of compressed air and particles of an abrasive material through the pipe and;
iii) blowing compressed air at a controlled flow and temperature together with a liquid polymer coating material comprising a silane based polymer composition into the pipe so that a coating layer is applied onto the interior walls of the pipe followed by;
iv) allowing the polymer coating material to self-cure at ambient temperature.

2. The method according to claim 1, wherein the pipe is a system of pipes.

3. The method according to claim 2, wherein the system of pipes is selected from the group consisting of a gutter pipe, a rain pipe, a sewage pipe, a hot water pipe, a cold water pipe, a drain pipe, a portable water pipe, a natural gas pipe, and a fire system sprinkler pipe.

4. The method according to claim 1, wherein the temperature in step iv) is ambient temperature of the pipe without external heating.

5. The method according to claim 1, wherein the temperature in step iv) is ambient temperature of the pipe with external heating.

## Patentansprüche

1. Verfahren zur Innenbeschichtung eines Rohrs, umfassend die Schritte:
i) Trocknen des Rohrs mittels Durchleitung entfeuchteter Pressluft, gefolgt von
ii) Reinigung des Rohrs durch Pumpen einer Mischung aus Pressluft und Partikeln eines Schleifmittels durch das Rohr und
iii) Blasen von Pressluft zusammen mit einem flüssigen polymeren Beschichtungsmittel, das eine auf Silan basierende Polymerzusammensetzung umfasst, in das Rohr bei kontrolliertem Durchfluss und kontrollierter Temperatur, sodass eine Beschichtungsschicht auf die Innenwände des Rohrs aufgetragen wird, gefolgt von
iv) Selbsthärtung des polymeren Beschichtungsmittels bei Umgebungstemperatur.

2. Verfahren nach Anspruch 1, wobei das Rohr ein System aus Rohren ist.

3. Verfahren nach Anspruch 2, wobei das System aus Rohren aus der Gruppe bestehend aus einem Fallrohr, einer Regenrinne, einem Abzugsrohr, einer Warmwasserleitung, einer Kaltwasserleitung, einem Dränrohr, einer ortsbeweglichen Wasserleitung, einem Erdgasrohr und einer Sprinklerleitung eines Brandschutzsystems ausgewählt wird.

4. Verfahren nach Anspruch 1, wobei die Temperatur in Schritt iv) die Umgebungstemperatur des Rohrs ohne externe Beheizung ist.

5. Verfahren nach Anspruch 1, wobei die Temperatur in Schritt iv) die Umgebungstemperatur des Rohrs mit externer Beheizung ist.

## Revendications

1. Procédé de revêtement interne d'un tuyau comprenant les étapes de :
i) sécher le tuyau en faisant circuler dans celui-ci un flux d'air comprimé déshumidifié puis ;
ii) nettoyer ledit tuyau par pompage d'un mélange d'air comprimé et de particules d'un matériau abrasif à travers le tuyau et ;
iii) souffler de l'air comprimé à un débit et une température contrôlés conjointement avec un matériau de revêtement polymère liquide comprenant une composition polymérique à base de silane dans le tuyau de sorte qu'une couche de revêtement soit appliquée sur les parois intérieures du tuyau ;
iv) laisser le matériau de revêtement polymère s'auto-durcir à température ambiante.

2. Procédé selon la revendication 1, dans lequel le tuyau est un système de tuyaux.

3. Procédé selon la revendication 2, dans lequel le système de tuyaux est choisi dans le groupe constitué d'une gouttière, d'un tuyau d'eaux pluviales, d'un tuyau d'égout, d'un tuyau d'eau chaude, d'un tuyau d'eau froide, d'un tuyau d'évacuation, d'un tuyau d'eau mobile, d'un tuyau de gaz naturel et d'un tuyau de gicleur d'un extincteur d'incendie.

4. Procédé selon la revendication 1, dans lequel la température à l'étape iv) est la température ambiante du tuyau sans chauffage externe.

5. Procédé selon la revendication 1, dans lequel la température à l'étape iv) est la température ambiante du tuyau avec chauffage externe.
